# EUROPEAN PATENT APPLICATION

(11) **EP 1 780 874 A1**
(43) Date of publication of application: **02.05.2007**
(21) Application number: 05751472.1
(22) Date of filing: 17.06.2005
(51) Int. Cl.: H02K 11/00, H02K 1/22, H02K 1/27, H02K 21/22

(54) **ROTOR OF MOTOR**

(30) Priority: 28.06.2004 JP 2004189595
(71) Applicant: KABUSHIKI KAISHA TOSHIBA, Tokyo 105-8001 (JP); Toshiba Consumer Marketing Corporation, Tokyo 101-0021 (JP); Toshiba Ha Products Co., Ltd., Ibaraki-shi, Osaka 567-0013 (JP)
(72) Inventor: HATTORI, Masami, c/o TOSHIBA HA PRODUCTS CO., LTD., Ibaraki-shi, Osaka 5670013 (JP); SHIGA, Tsuyoshi, c/o TOSHIBA HA PRODUCTS CO., LTD., Ibaraki-shi, Osaka 5670013 (JP)
(74) Representative: O'Connell, David Christopher
(86) International application number: PCT/JP2005/011160
(87) International publication number: WO 2006/001232

(57) **Abstract**

A rotor for an electric motor includes a rotor core (19) formed by axially stacking a plurality of magnetic steel plates and a plurality of axially extending magnet insertion holes (18), and a magnetic sensor (23) provided on the stator (11) so as to be opposed to an axial end face of the rotor (16), a positioning steel plate (28a) provided on one of both axial ends of the rotor core (19) opposed to the magnetic sensor (23) and having an opening (30) corresponding to the magnetic insertion holes (18), and a protrusion (31) which is provided on at least one of paired circumferentially extending sides (30a) of the opening (30) so as to protrude inside the opening (30).

## Description

### TECHNICAL FIELD

The present invention relates to a rotor for an electric motor in which permanent magnets for magnetic field are incorporated in a rotor core.

### BACKGROUND ART

A rotor for an electric motor includes a rotor core formed by stacking multiple of steel plates and provided with magnet insertion holes and permanent magnets for magnetic field inserted in the respective magnet insertion holes (see JP-A-2003-333779, for example).

A rotational position and rotational speed of the rotor are generally detected by a magnetic sensor disposed so as to be opposed to axial end faces of the permanent magnets, for example, Hall ICs in the motor comprising the above-described rotor.

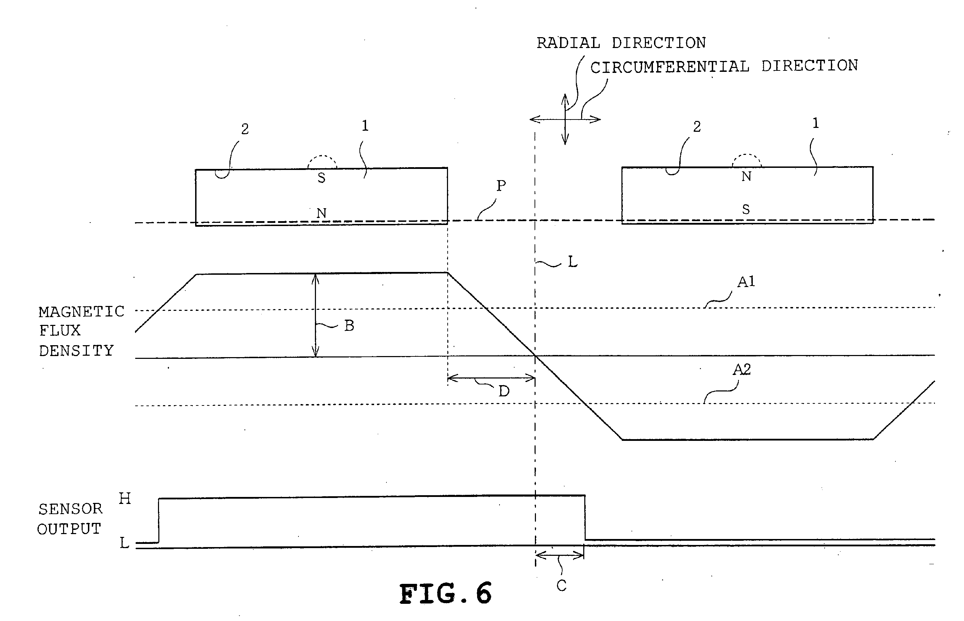

FIG. 6 shows an example of the relationship between changes in magnetic flux density with rotation of the rotor and output of a magnetic sensor. FIG. 6 schematically illustrates on an upper column an arrangement of the rotor magnets 1 and the magnet insertion holes 2 in an axial end face of the rotor opposed to the magnetic sensor. A horizontal direction in FIG. 6 is the circumferential direction, whereas a vertical direction is the radial direction. The magnets 1 and magnet insertion holes 2 are set substantially at the same size. Furthermore, a part around the magnets 1 and magnet insertion holes 2 constitutes steel plates made from a magnetic material although the steel plates are not shown.

FIG. 6 schematically illustrates on middle and lower columns the relationship between magnetic flux acting on the magnetic sensor, and an output signal of the magnetic sensor and rotational position of the rotor (relative position of the magnetic sensor). Axes of abscissas in the middle and lower columns denote a rotational position of the rotor and correspond to a position of the magnet 1. In the figure, chain line L designates an inter-pole center of the rotor, distance D designates a distance from a circumferential end of the rotor magnet 1 to the inter-pole center L and broken line P designates a locus of the magnetic sensor moved relatively with rotation of the rotor.

The magnetic flux acting on the magnetic sensor becomes largest when the magnetic sensor is opposed to the rotor magnet 1 as shown in FIG. 6, whereas the magnetic flux acting on the magnetic sensor becomes smaller as the magnetic sensor and the rotor magnet 1 are spaced away from each other. Reference symbol "B" designates magnetic flux density (maximum magnetic flux density) in the case where the magnetic sensor and the rotor magnet 1 are opposed to each other.

On one hand, output of the magnetic sensor is switched between "high" and "low" when the flux density exceeds thresholds (operating flux density) A1 and A2. As a result, switching of the rotor magnetic pole is detected from pole S to pole N or pole N to pole S.

As obvious from FIG. 6C, displacement results from magnetic hysteresis occurs between the time when a direction of magnetic field applied to the magnetic sensor is switched (the time when the magnetic sensor passes through the inter-pole center) and the time when the magnetic sensor is operated. In this case, distance C designates an indicator of displacement. Accuracy in the detection of rotational position of the rotor is better as displacement C is small.

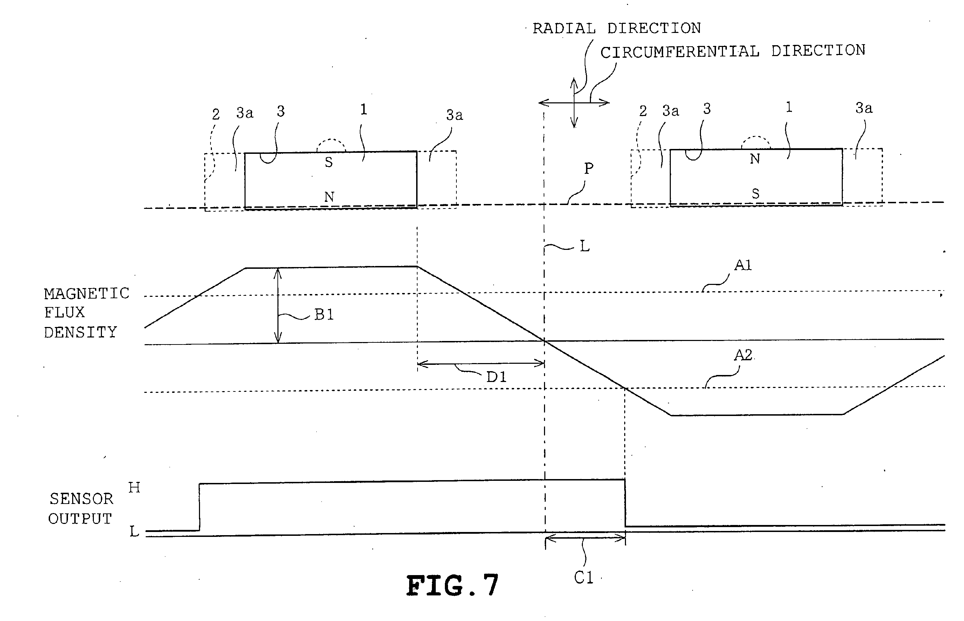

On the other hand, FIG. 7 shows the relationship between the change in the magnetic flux density with rotation of the rotor provided with a positioning structure for the rotor magnet 1 on the axial end face and an output signal of the magnetic sensor. More specifically, the aforesaid rotor is provided with a steel plate in order that the rotor magnets 1 may be positioned axially. The steel plate has a small opening 3 which is formed in the axial end face opposed to the magnetic sensor and has a smaller area than each magnet insertion hole 2. The opening 3 has a smaller circumferential length than the magnet insertion hole 2, whereupon both circumferential ends of each magnet 1 are covered with the steel plate. Parts of the steel plate covering both circumferential ends of each magnet 1 will be referred to as "covering portion 3a."

In the case where both circumferential ends of each rotor magnet 1 are thus covered with the covering portion 3a, magnetic flux leaks through the covered portions of each magnet 1. Accordingly, magnetic flux density B1 acting on the magnetic sensor in the part thereof opposed to the rotor magnet 1 is smaller than the aforesaid magnetic flux density B (B>B1). Furthermore, as the provision of the covering portion 3a, distance D1 from the circumferential end of the opening 3 to the inter-pole center L is longer than distance D (D<D1). Thus, a change rate of the inter-pole magnetic flux density is reduced such that displacement C1 between the time when the direction of magnetic field is switched and the time when the magnetic sensor is operated becomes larger than the aforesaid displacement C (C<C1). More specifically, the accuracy in the detection of rotational position of the rotor becomes worse when the rotor magnets 1 are easily positioned axially.

### DISCLOSURE OF THE INVENTION

### PROBLEM TO BE OVERCOME BY THE INVENTION

An object of the present invention is to provide a rotor for an electric motor which can prevent the detection accuracy of the rotational position from being reduced while the rotor magnets can easily be positioned axially.

### MEANS FOR OVERCOMING THE PROBLEM

The present invention is a rotor for an electric motor comprising a stator and a rotor including a rotor core formed by axially stacking a plurality of magnetic steel plates and a plurality of axially extending magnet insertion holes, and a magnetic sensor provided on the stator so as to be opposed to an axial end face of the rotor, characterized by a positioning steel plate provided on one of both axial ends of the rotor core opposed to the magnetic sensor and having an opening corresponding to the magnetic insertion holes, and a protrusion which is provided on at least one of paired circumferentially extending sides of the opening so as to protrude inside the opening.

### EFFECT OF THE INVENTION

In the rotor for the electric motor of the present invention, the permanent magnets can be positioned axially since the opening with the protrusion is provided in the positioning steel plate. Moreover, since the protrusion is provided on the paired circumferentially extending sides of the opening, the reduction in the magnetic flux density can be rendered smaller, and the change rate of the magnetic flux density can be increased accordingly between the magnetic poles. This can prevent a reduction in the detection accuracy of the magnetic sensor.

### BRIEF DESCRIPTION OF THE DRAWINGS

FIG. 1 is a longitudinally sectional side view of a part of an electric motor around a Hall IC in one embodiment in accordance with the present invention;
FIG. 2 is a partially enlarged plan view of the motor;
FIG. 3 is a view explaining the relationship between changes in the magnetic flux density with rotation of the rotor and output of a magnetic sensor;
FIG. 4 is a view similar to FIG. 3, showing a second embodiment;
FIG. 5 is a view similar to FIG. 3, showing a third embodiment;
FIG. 6 is a view similar to FIG. 3, showing a conventional rotor; and
FIG. 7 is a view similar to FIG. 3, showing another conventional rotor.

### BEST MODE FOR CARRYING OUT THE INVENTION

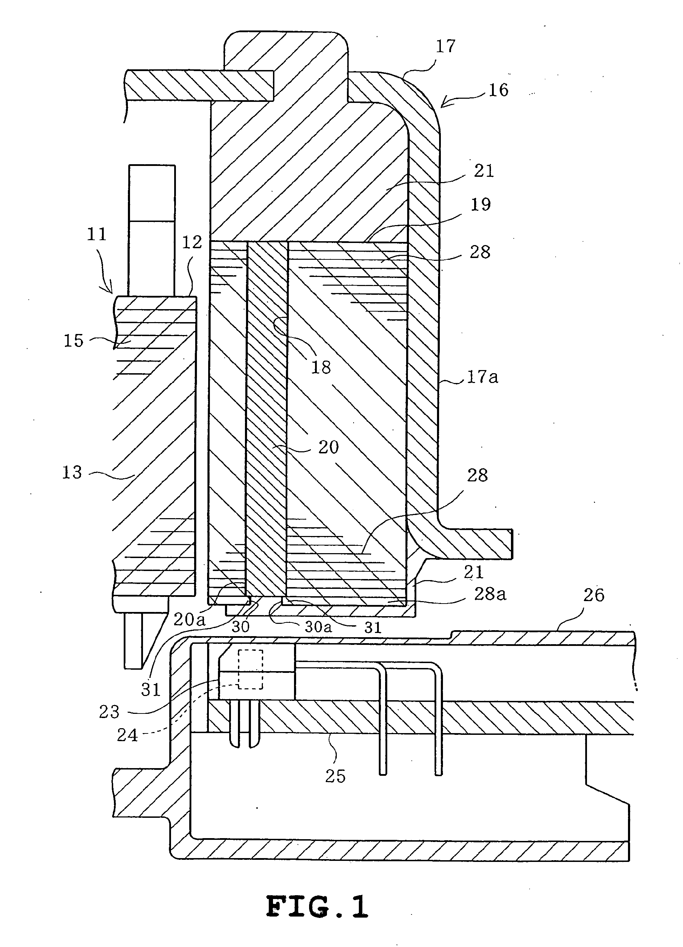

The present invention will be described in detail with reference to the accompanying drawings. FIGS. 1 to 3 illustrate a first embodiment in which the invention is applied to an electric motor of the outer rotor type.

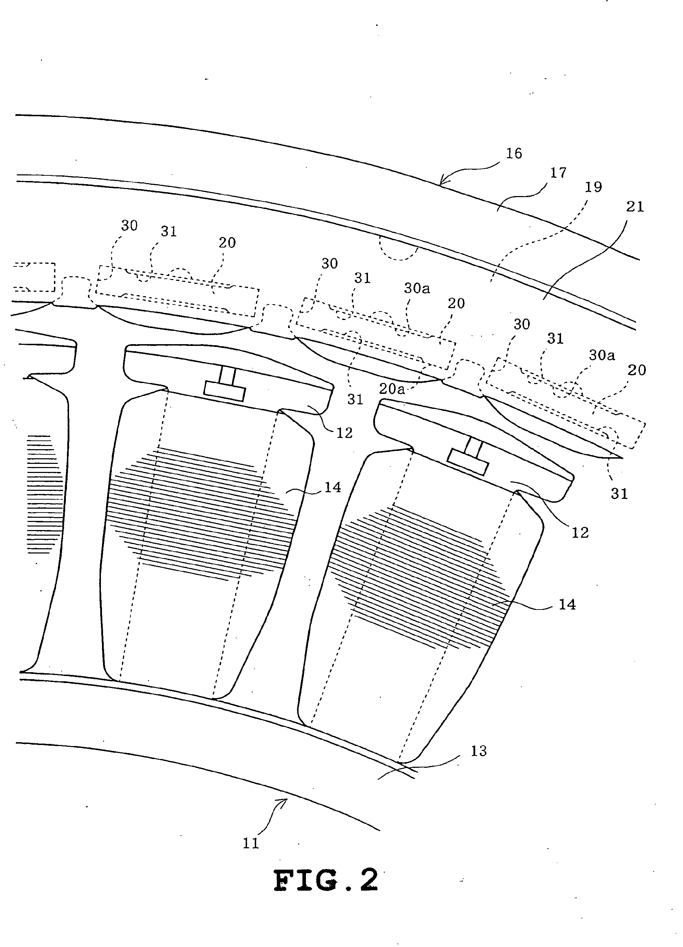

As shown in FIGS. 1 and 2, a stator 11 of the electric motor of the embodiment comprises a stator core 13 having a plurality of radially protruding teeth 12 and stator coils 14 wound on the teeth 12. The stator core 13 is formed by stacking a plurality of magnetic steel plates 15 axially (vertically in FIG. 1).

A rotor 16 comprises a frame 17 made from a magnetic material into the shaped of a shallow container and an annular rotor core 19 disposed along an inner surface of a circumferential wall 17a of the frame 17. The rotor core 19 is provided with a plurality of magnet insertion holes 18 axially extending therethrough and circumferentially spaced from one another. Permanent magnets 20 for magnetic field are inserted in the magnet insertion holes 18 respectively. Each magnet insertion hole 18 and each permanent magnet 20 have rectangular sections respectively. The frame 17, the rotor core 19 and the permanent magnets 20 are integrated by a resin 21, whereby the rotor 16 is constructed. Thus, since the frame 17, the rotor core 19 and the permanent magnets 20 are integrated by a resin 21 to be constructed into the rotor 16, the strength of the rotor 16 can be improved.

The rotor 16 is disposed so that an inner circumferential surface of the rotor core 19 is opposed to distal end faces (outer circumferential surfaces) of the stator 11 with a predetermined gap therebetween. The rotor 16 is rotated about a rotational shaft (not shown) fixed to a central part of the frame 17.

To the stator 11 is fixed a case 26 which is made from a synthetic resin and accommodates a printed circuit board 25. A magnetic sensor 23 provided with a Hall IC 24 is mounted on the printed circuit board 25. The Hall IC 24 is disposed so as to be opposed to portions of both axial end faces of each permanent magnet 20 near to the inner circumference of the magnet.

The rotor core 19 is constructed by stacking multiple steel plates 28 axially (vertically in FIG. 1). In the following description, an end steel plate 28a refers to a steel plate located at an axial end of the rotor core 19 opposed to the magnetic sensor 23. The end steel plate 28a corresponds to a positioning steel plate in the present invention. The magnet insertion holes 18 are formed in the respective steel plates 28 except for the end steel plate 28a. Each insertion hole 18 has an opening area which is substantially the same sectional area as the sectional area of each permanent magnet 20.

On the other hand, rectangular openings 30 corresponding to the magnet insertion holes 18 are provided in the end steel plates 28a respectively. Each opening 30 has substantially the same size as each magnet insertion hole 18 but a slightly smaller axial dimension near the circumferentially central portion than each magnet insertion hole 18. More specifically, protrusions 31 protruding toward the openings 30 are formed in the paired circumferentially extending sides 30a of each opening 30. Each permanent magnet 20 can be axially positioned by the protrusions 31 without falling out of the insertion hole 18.

An end of the rotor core 19 opposed to the magnetic sensor 23 (the lower end in FIG. 1) is covered with the resin 21 except for a part thereof. Accordingly, the resin 21 has entered the openings 30, covering the lower end of each permanent magnet 20.

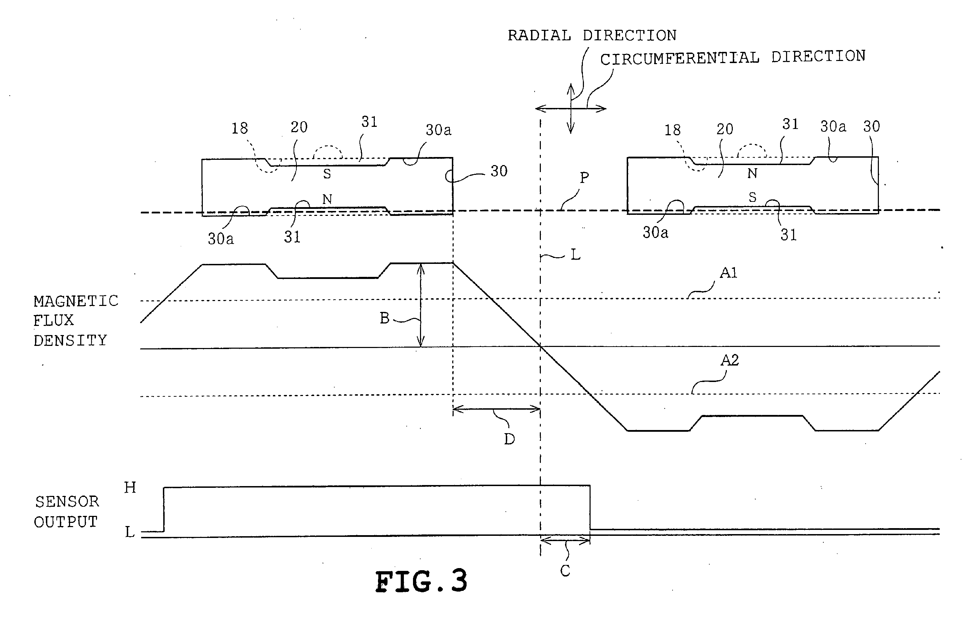

The following describes the relationship between changes in the magnetic flux density with rotation of the rotor and output of a magnetic sensor with reference to FIG. 3. In order that the embodiment may easily be compared with the conventional rotor as shown in FIG. 6, A1 and A2 designate thresholds of the magnetic sensor 23 (operating magnetic flux density) and B designates maximum magnetic flux density. D designates a distance from the circumferential end of the permanent magnet 20 to inter-pole center L.

The opening 30 having the protrusions 31 are provided in each end plate 28a in the embodiment. Accordingly, a part of the axial end of each permanent magnet 20 is covered with each protrusion 31 such that the magnetic flux leaks. As a result, in the portion where each protrusion 31 is present, the magnetic flux density acting on the magnetic sensor 23 becomes slightly lower than the magnetic flux density B even if the portion is opposed to the permanent magnet 20. However, since each protrusion 31 is located at the circumferential center of the opening 30, the magnetic flux density acting on the magnetic sensor 23 remains unchanged at the circumferential end of each permanent magnet 20.

Accordingly, the inter-pole magnetic flux density has the same change rate as in the conventional example if the threshold of the magnetic sensor 23 and the distance from the circumferential end of the permanent magnet 20 to the inter-pole center L are the same as those in the conventional example. Thus, the difference as shown by "C" which is the same as in the conventional example exists between the timing of the change in the direction of the magnetic field applied to the magnetic sensor 23 and the timing of the operation of the magnetic sensor 23.

According to the foregoing embodiment, the accuracy in the detection of rotational position of the rotor by the magnetic sensor can be prevented from being reduced while the permanent magnets 20 can be positioned axially.

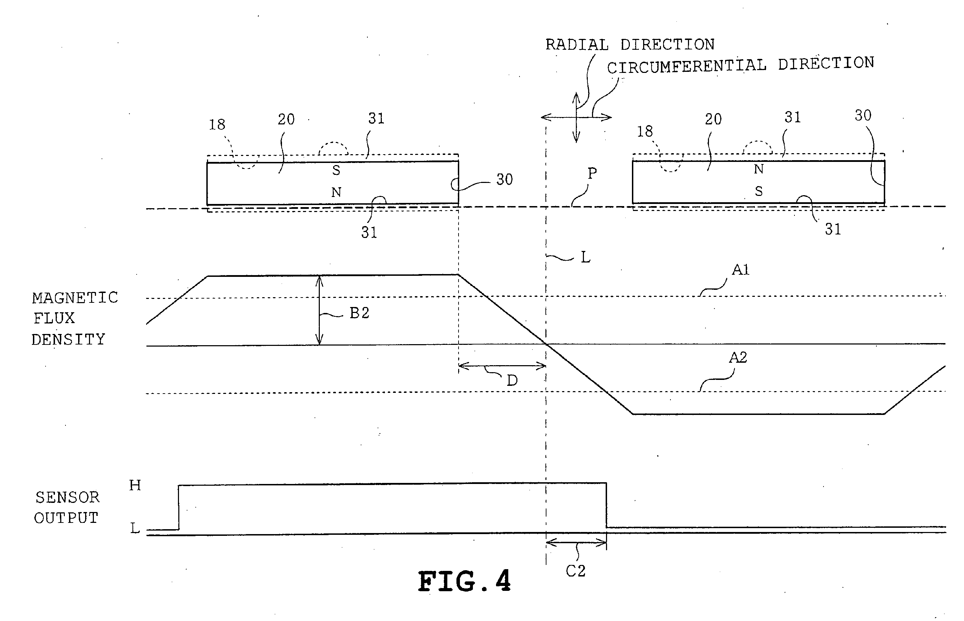

FIG. 4 illustrates a second embodiment of the invention. Differences of the second embodiment from the first embodiment will be described. Similar or identical parts in the second embodiment are labeled by the same reference symbols as those in the first embodiment. As shown on an upper column of FIG. 4, each protrusion 31 of the opening 30 extends over the whole circumference of the opening in the second embodiment. That is, the whole radial dimension of each opening 30 is set so as to be smaller than the radial dimension of each magnet insertion hole 18.

Each permanent magnet 20 can axially be positioned by the protrusion 31 in the embodiment, too. Furthermore, since each protrusion extends over the whole circumference of the opening 30, the magnetic flux density B2 acting on the magnetic sensor 23 in the portion where the magnetic sensor 23 is opposed to the permanent magnet 20 becomes lower than the magnetic flux density B in whole (B2<B).

However, differing from the covering portion 3a in the conventional example as shown in FIG. 7, each protrusion 31 does not narrow the opening 30 circumferentially. Accordingly, the distance from the circumferential end of the permanent magnet 20 to the inter-pole center L is shown by "D" as in the conventional example of FIG. 6, whereupon the change rate of inter-pole magnetic flux density becomes smaller than in the conventional example. As a result, when the threshold of the magnetic sensor 23 is A1 or A2, the difference C2 becomes larger than the difference C between the timing of the change in the direction of the magnetic field applied to the magnetic sensor 23 and the timing of the operation of the magnetic sensor 23 (C<C2) and accordingly, the detection accuracy in the embodiment is slightly lower than in the conventional example in FIG. 6.

On the other hand, the distance from the circumferential end of the permanent magnet 20 to the inter-pole center L is smaller than in the conventional example of FIG. 7. Accordingly, when an amount of reduction in the magnetic flux density due to the protrusion 31 is the same as due to the covering portion 3a, the change rate of the inter-pole magnetic flux density in the embodiment is larger than in the conventional example of FIG. 7, whereupon the accuracy in the detection of rotational position can be improved better in the embodiment.

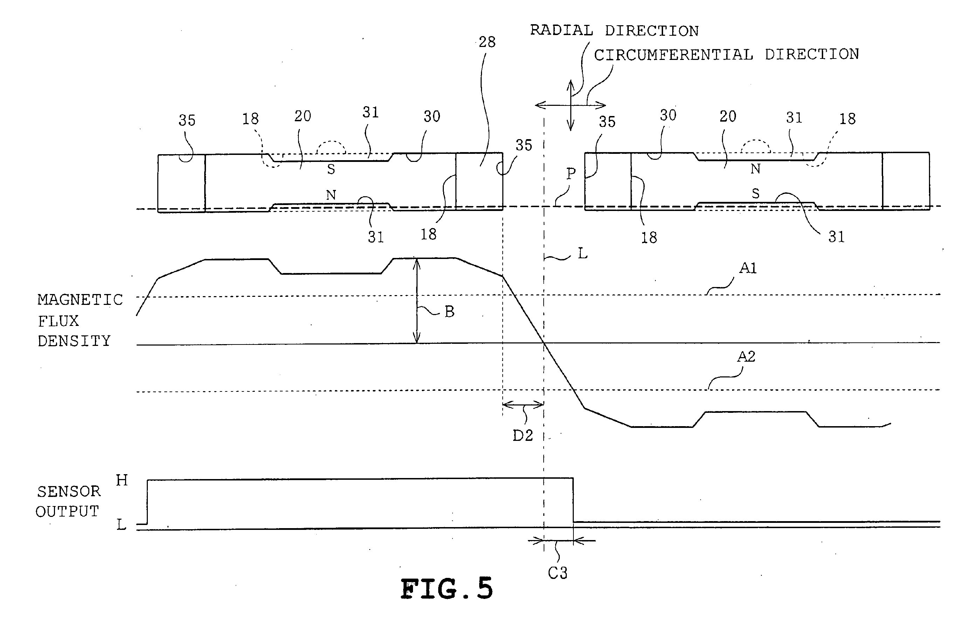

FIG. 5 illustrates a third embodiment of the invention. Differences of the third embodiment from the first embodiment will be described. Similar or identical parts in the second embodiment are labeled by the same reference symbols as those in the first embodiment. As shown on an upper column of FIG. 5, in the third embodiment, the circumferential dimension of each opening 30 is rendered larger than the circumferential dimension of each permanent magnet 20, and opening extension portions 35 not opposed to the permanent magnets 20 are provided in the both circumferential ends of each opening 30 respectively. As the result of the construction, a part of the steel plate 28 in contact with the end plate 28a is exposed in the opening 35.

In the above-described construction, too, the permanent magnets 20 can axially be positioned by the protrusions 31 of the openings 30.

Furthermore, since each opening 30 has the protrusions 31, the magnetic flux density is slightly lowered in the portion of each opening 30 where each protrusion 31 is provided but the magnetic flux density in the other portion becomes "B."

Furthermore, since the opening extension portion 35 is provided, the distance D2 from the distance from the circumferential end of the permanent magnet 20 to the inter-pole center L becomes smaller than in the conventional example of FIG. 6 and the first embodiment (D>D2). Moreover, since no end plate 28a is present at both circumferential sides of each permanent magnet 20 as the result of provision of the opening extension portion 35, an amount of flux leakage becomes smaller in this portion. Accordingly, an amount of reduction in the magnetic flux density in the opening extension portion 35, whereupon the change rate of inter-pole magnetic flux density can be rendered larger than in the first embodiment. As a result, when the threshold of the magnetic sensor 23 is A1 or A2, the difference C3 becomes smaller than the difference C between the timing of the change in the direction of the magnetic field applied to the magnetic sensor 23 and the timing of the operation of the magnetic sensor 23 (C>C3) and accordingly, the detection accuracy can be improved.

The invention should not be limited by the foregoing embodiments but the embodiments can be modified as follows, for example. The protrusion 31 may be provided only on one of both sides of each opening 30 which is away from the magnetic sensor 23 (the upper side 30a in FIG. 3, for example).

Although the circumferentially long protrusions 31 are provided on the sides 30a of each opening 30 respectively in the foregoing embodiment, a plurality of protrusions each of which has a small circumferential dimension may be provided on each side 30a, instead.

The invention may be applied to a rotor for an electric motor of the inner rotor type.

### INDUSTRIAL APPLICABILITY

As obvious from the foregoing, the rotor for the electric motor in accordance with the invention is useful as a rotor for an electric motor directly driving a rotating tub of a washing machine, for example, since the rotor can improve the accuracy in the detection of rotational position by the magnetic sensor.

## Claims

1. A rotor for an electric motor comprising a stator (11) and a rotor (16) including a rotor core (19) formed by axially stacking a plurality of magnetic steel plates and a plurality of axially extending magnet insertion holes (18), and a magnetic sensor (23) provided on the stator (11) so as to be opposed to an axial end face of the rotor (16), **characterized by** a positioning steel plate (28a) provided on one of both axial ends of the rotor core (19) opposed to the magnetic sensor (23) and having an opening (30) corresponding to the magnetic insertion holes (18), and a protrusion (31) which is provided on at least one of paired circumferentially extending sides (30a) of the opening (30) so as to protrude inside the opening (30).

2. The rotor for the electric motor according to claim 1, wherein the protrusion (31) is constructed so as to protrude inside the opening (30) from near a circumferential middle of the side (30a).

3. The rotor for the electric motor according to claim 1, wherein the other side of the paired sides (30a) is constructed so as to be located nearer to the magnetic sensor (23), and the protrusion (31) is provided on said one side (30a).

4. The rotor for the electric motor according to claim 2, wherein said other side (30a) of the opening (30) is constructed so as to be located nearer to the magnetic sensor (23) than said other side (30a).

5. The rotor for the electric motor according to claim 1, wherein the protrusion (31) is constructed not to cover both circumferential ends of each permanent magnet (20).

6. The rotor for the electric motor according to claim 3, wherein the protrusion (31) is constructed not to cover both circumferential ends of each permanent magnet (20).

7. The rotor for the electric motor according to claim 1, wherein the opening (30) is constructed so as to have a larger circumferential length than each permanent magnet (20), and the opening (30) has both circumferential ends each of which is formed into an opening extension portion (35) which does not oppose to the permanent magnets (20).

8. The rotor for the electric motor according to claim 2, wherein the opening (30) is constructed so as to have a larger circumferential length than each permanent magnet (20), and the opening (30) has both circumferential ends each of which is formed into an opening extension portion (35) which does not oppose to the permanent magnets (20).

9. The rotor for the electric motor according to claim 1, further comprising a frame (17) formed so as to be integrated with the rotor core (19) and the permanent magnets (20) by a resin (21).

10. The rotor for the electric motor according to claim 2, further comprising a frame (17) formed so as to be integrated with the rotor core (19) and the permanent magnets (20) by a resin (21).
